Europäisches Patentamt

European Patent Office

Office européen des brevets

(19)

(11) **EP 0 928 428 B1**

(12) **EUROPÄISCHE PATENTSCHRIFT**

(45) Veröffentlichungstag und Bekanntmachung des Hinweises auf die Patenterteilung:
**28.02.2001 Patentblatt 2001/09**

(21) Anmeldenummer: **97942812.5**

(22) Anmeldetag: **08.09.1997**

(51) Int Cl.$^7$: **G01S 15/89**, G01S 7/52

(86) Internationale Anmeldenummer:
**PCT/DE97/01988**

(87) Internationale Veröffentlichungsnummer:
**WO 98/15847 (16.04.1998 Gazette 1998/15)**

(54) **VERFAHREN ZUR BEWERTUNG DER MESSQUALITÄT EINES ENTFERNUNGSMESSSENSORS AN EINEM AUTONOMEN MOBILEN SYSTEM**

METHOD FOR ASSESSING THE MEASURING ACCURACY OF A SENSOR DESIGNED TO MEASURE THE DISTANCE ON AN OFF-LINE MOBILE SYSTEM

PROCEDE D'EVALUATION DE LA QUALITE DE MESURE D'UN CAPTEUR POUR MESURER LA DISTANCE SUR UN SYSTEME MOBILE AUTONOME

(84) Benannte Vertragsstaaten:
**DE FR GB IT**

(30) Priorität: **07.10.1996 DE 19641261**

(43) Veröffentlichungstag der Anmeldung:
**14.07.1999 Patentblatt 1999/28**

(73) Patentinhaber: **SIEMENS AKTIENGESELLSCHAFT**
**80333 München (DE)**

(72) Erfinder: **SOIKA, Martin**
**D-84028 Landshut (DE)**

(56) Entgegenhaltungen:
- **ELFES A: "Sonar-based real-world mapping and navigation" IEEE JOURNAL OF ROBOTICS AND AUTOMATION, JUNE 1987, USA, Bd. RA-3, Nr. 3, ISSN 0882-4967, Seiten 249-265, XP002051542**
- **ELFES A: "USING OCCUPANCY GRIDS FOR MOBILE ROBOT PERCEPTION AND NAVIGATION" COMPUTER, Bd. 22, Nr. 6, Juni 1989, Seiten 46-57, XP000035969**

**Beschreibung**

Verfahren zur Bewertung der Meßqualität eines Entfernungsmeßsensors an einem autonomen mobilen System

Die Erfindung betrifft ein Verfahren zur Bewertung der Qualität von Entfernungsmessungen und der zugehörigen Meßsensoren, welche es einem autonomen mobilen System ermöglichen, eine zellular strukturierte Karte von seiner Umgebung aufzubauen.

Beim Einsatz autonomer mobiler Systeme (AMS) in unpräparierten Alltagsumgebungen [1], diese im allgemeinen dem AMS a priori nicht bzw. nur zum Teil bekannt sind, ist es um so mehr notwendig, daß es seine Umgebung mittels geeigneter Sensoren wahrnimmt. Aus den Sensormessungen wird dann ein Umweltmodell bevorzugt in Form einer zellular strukturierten Umgebungskarte aufgebaut, das die jeweiligen Unzulänglichkeiten des Meßprinzips oder der Sensorik selbst, wie beispielsweise systematische Meßfehler berücksichtigt [2].

Für die Abarbeitung eines kommandierten Auftrags führt das AMS beispielsweise Funktionen wie Hindernisvermeidung, Navigation und Lokalisierung abhängig von der momentanen Umgebung, durch. Fehlmessungen können den Erfolg von solchen Operationen gefährden. Zum einen können nicht detektierte Hindernisse zu Kollisionen führen, zum anderen beeinträchtigen "Geisterhindernisse" die Bewegungsfreiheit des Systems. Der Erfolg einer durchzuführenden Systemoperation hängt demnach in starkem Maße vom Zustand der Sensoren ab. Fehler der Sensorik außerhalb der spezifizierten und innerhalb der betreffenden Anwendung tolerierbaren Grenzen müssen deshalb sicher erkannt werden.

Anhand den angestrebten typischen Einsatzumgebungen autonomer mobiler Systeme werden an eine Fehlererkennung für dessen Sensoren folgende Anforderungen gestellt:

- Unabhängigkeit von der Umgebung:
  es sollen keine Referenz- oder Eichumgebungen notwendig sein.
- Unabhängigkeit von der Art des Fehlers:
  wegen der Vielzahl der Fehlerarten, die im allgemeinen nicht alle a priori bekannt sind, soll der Ansatz möglichst alle Fehlerarten, die eine wesentliche Beeinträchtigung des Umgebungsmodells nach sich ziehen, abdecken.
- Online-Fähigkeit:
  aus Sicherheitsgründen soll eine ständige Überwachung der Sensoren möglich sein.

Aus Gründen der Maximierung des Wahrnehmungsbereiches werden Sensoren vorwiegend am Umfang eines mobilen Roboters befestigt. Dadurch sind sie jedoch zum Teil erheblichen mechanischen Beanspruchungen durch Kollisionen mit externen Objekten ausgesetzt. Neben einem Hardwaredefekt eines Sensors kann es zudem passieren, daß durch mechanische Einwirkungen die Abbildungseigenschaften eines physikalisch an sich funktionstüchtigen Sensors durch fehlerhafte Parameter erheblich beeinträchtigt sind.

Verfahren zur Erstellung von zellular strukturierten Umgebungskarten von autonomen mobilen Systemen sind aus dem Stand der Technik bekannt. Beispielsweise werden zellular strukturierte Karten verwendet, welche zur Markierung von Hindernissen und zur darauf basierenden Fahrwegplanung je Zelle Belegungs- und Freiwahrscheinlichkeiten benutzen [3,4]. Sie werden beispielsweise mit Hilfe eines vereinfachten probablistischen Sensormodells [5] durch die eingehenden Messungen M aufgebaut.

Aus [9] ist ein autonomes mobiles System bekannt, welches eine Mehrzahl von Entfernungsmeßsensoren aufweist. Unter Verwendung dieser Entfernungsmeßsensoren werden Hindernisse in einer Umgebeung des autonomen mobilen Systems vermessen.

Unter Verwendung von Meßergebnissen der Messungen werden in ihrer Lage mit der Umgebung korrespondierende Zellen einer zellular strukturierten Umgebungskarte bezüglich ihres Belegungszustandes mit Hindernissen charakterisiert.

Lösungen zur Fehlererkennung und Kalibrierung für Sensorik autonomer mobiler Systeme (AMS) ohne Verwendung von Referenzmodellen und Eichkörpern sind bislang nicht bekannt.

Die der Erfindung zugrunde liegende Aufgabe besteht deshalb darin, ein Verfahren anzugeben, welches die Erkennung von Sensorfehlern eines autonomen mobilen Systems anhand einer zellular strukturierten Darstellung seiner Umgebung ermöglicht und zudem die Kalibrierung von Meßsensoren in unpräparierten Umgebungen unterstützt.

Diese Aufgabe wird gemäß den Merkmalen des Patentanspruches 1 gelöst.

Weiterbildungen der Erfindung ergeben sich aus den abhängigen Ansprüchen.

Ein besonderer Vorteil des erfindungsgemäßen Verfahrens besteht darin, daß basierend auf den Sensorinformationen über eine Zelle eine Qualitätsaussage über die gelieferten Meßergebnisse der einzelnen Sensoren gemacht werden kann, indem bewertet wird in wieweit sich die Sensorergebnisse gegenseitig bestätigen. Durch Hinzuziehen weiterer Zellen aus der zellular strukturierten Umgebungskarte kann das so anhand einer Zelle gefundenen Ergebnis für die sensorbezogene Qualität der Meßergebnisse in beliebiger Genauigkeit bestätigt werden.

Besonders einfach kann die Bewertung anhand der Zahl der vermessenden Sensoren und der Zahl der jeweils von diesen Sensoren gelieferten Ergebnisse bezüglich einer Zelle getätigt werden. Auf diese Weise bleibt der Rechenaufwand gering und es können sehr viele Zellen im Verbund miteinander bewertet werden.

Vorteilhaft kann nach dem erfindungsgemäßen Verfahren eine Wahrscheinlichkeit für die Funktionsfähigkeit eines Sensors angegeben werden, indem die Zahl der bisher bewerteten Zellen als Grundlage für die Bewertung des Sensors herangezogen wird. Insofern ist in Bezug auf den aktuellen Meßstand immer eine optimale Bewertung der einzelnen Sensoren gegeben.

Bevorzugt kann nach dem erfindungsgemäßen Verfahren ein Konsistenzmaß des Meßverhaltens einzelner Sensoren über mehrere Zellen angegeben werden, indem die Ergebnisse betreffender Sensoren bezüglich mehrerer Zellen der zellular strukturierten Umgebungskarte ausgewertet werden.

Besonders vorteilhaft lassen sich für einzelne Sensoren Wahrscheinlichkeiten bezüglich falscher oder richtig gelieferter Meßergebnisse anhand der Zahl der bisher gelieferten Meßergebnisse je Zelle und der identifizierbar je Zelle abgespeicherten Sensoren angeben.

Vorteilhaft lassen sich die Ergebnisse welche nach dem erfindungsgemäßen Verfahren gefunden werden, zellenspezifisch mit einem Gewichtungsfaktor versehen, weil damit der Einfluß der jeweiligen Zelle bei der Bewertung des jeweiligen Sensors eingestellt werden kann.

Bevorzugt werden nach dem erfindungsgemäßen Verfahren die jeweiligen Gewichtungsfaktoren in Abhängigkeit eines vom Sensor charakterisierten Belegt- oder Freizustandes der Zelle gewählt.

Vorteilhaft werden nach dem erfindungsgemäßen Verfahren jene Zellen ausgewertet, welche sich am Rande eines Beobachtungshorizontes des autonomen mobilen Systems befinden, da diese Zellen im Verlauf der Fahrt des autonomen mobilen Systems mit einer maximalen Anzahl von Sensoren vermessen wurden und damit eine hohe Information gespeichert enthalten, die nach Austritt dieser Zellen aus dem Beobachtungshorizont dem System verloren gingen.

Vorteilhaft kann das System nach dem erfindungsgemäßen Verfahren einen Selbsttest durchführen, indem es auf der Stelle dreht und damit Hindernisse in der Umgebung vermißt. Durch die Drehung auf der Stelle werden nacheinander die Hindernisse in der Umgebung von den einzelnen Sensoren des autonomen mobilen Systems erfaßt und im Anschluß daran können die Meßergebnisse der Zellen der Umgebungskarte ausgewertet werden, um fehlerhafte Sensoren zu ermitteln.

Vorteilhaft lassen sich für das erfindungsgemäße Verfahren sowohl optische als auch akustische Sensoren verwenden.

Im folgenden wird die Erfindung anhand von Figuren weiter erläutert.

Figur 1 zeigt eine zellular strukturierte Umgebungskarte. In Figur 2 und 3 sind die Konsistenzmaße in Abhängigkeit davon angegeben wieviel Sensoren die betreffende Gitterzelle als belegt oder frei angesehen haben, während der zu bewertende Sensor diese als belegt klassifiziert hat.

In Figur 4 und 5 sind die Konsistenzmaße in Abhängigkeit davon angegeben wieviele Sensoren die betreffende Gitterzelle als belegt bzw. frei klassifiziert haben, während der zu bewertende Sensor diese als frei klassifiziert hat.

In Figur 6 ist ein Beispiel für einen Selbsttest zur Kalibrierung von Meßsensoren angegeben.

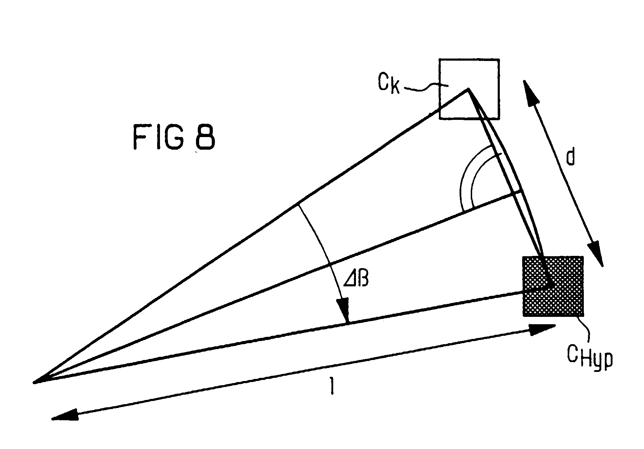

Figur 7 und 8 geben ein Ausführungsbeispiel zur Kalibrierung nach dem erfindungsgemäßen Verfahren an.

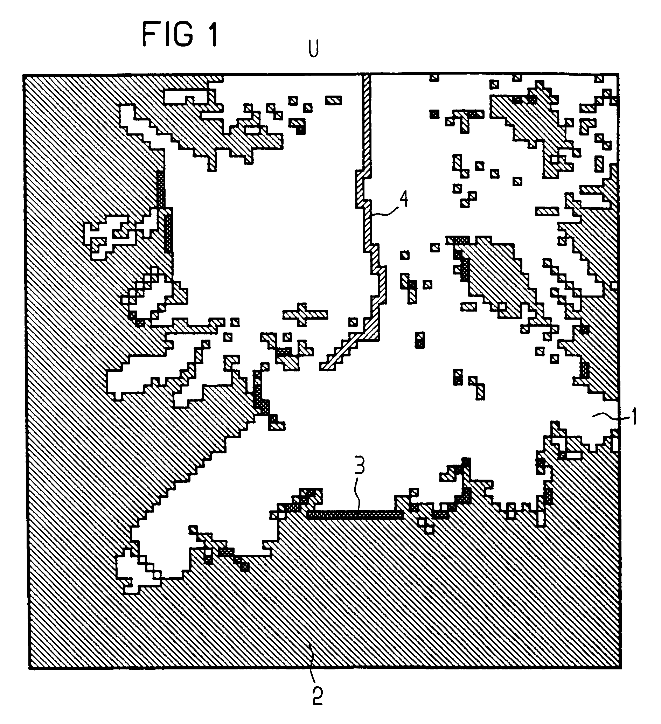

Figur 1 zeigt eine Umgebungskarte die nach einem Verfahren aus dem Stand der Technik aufgebaut wurde. Mit 1 sind freie Zellen der zellular strukturierten Umgebungskarte bezeichnet mit 2 sind Zellen bezeichnet, welche mit großer Wahrscheinlichkeit nicht belegt sind und mit 3 sind Zellen bezeichnet, welche mit großer Wahrscheinlichkeit Hindernisse darstellen. Mit 4 ist die Spur des autonomen mobilen Systems angegeben.

In dem bekannten Verfahren zum Aufbau einer zellular strukturierten Umgebungskarte U beispielsweise nach Elfes [6, 7] wird diese mit Hilfe eines vereinfachten probablistischen Sensormodells [5] durch die eingehenden Messungen M aufgebaut. Dieses ideale Sensormodell zeichnet sich dadurch aus, daß seine Wahrscheinlichkeitsdichteverteilung durch das Kronecker-Delta bestimmt ist. Durch die diskrete Zufallsvariable X mit den beiden Zuständen OCC und FREE wird für jede einzelne Zelle $C_i$ der Belegungszustand durch die Wahrscheinlichkeit

$$P(X(C_i) = OCC \mid \{M\}_t) = P(C_i \mid \{M\}_t)$$
$$P(X(C_i) = FREE \mid \{M\}_t) = P(\neg C_i \mid \{M\}_t) = 1 - P(C_i \mid \{M\}_t) \qquad (1)$$

beschrieben. Bei einer Modifikation des Belegungszustandes infolge einer Messung werden erfindungsgemäß zusätzlich die für diese Messung verantwortlichen Sensoren protokolliert. Demnach erhält jede in der Umgebungskarte befindliche Zelle neben der Belegungswahrscheinlichkeit eine zugeordnete Liste von Sensoren, die diese Zelle als belegt bzw. unbelegt "gesehen" haben.

Durch die Bewegung des AMS bei parallelem Messen werden von verschiedenen Sensoren aus verschiedenen Blickwinkeln wiederholt Aussagen über den Belegungszustand der Zellen gemacht. Die so berechneten Wahrscheinlichkeiten ergeben das Bild in Figur 1 wobei:

1: $P(C_i|\{M\}_t) \leq 0.25$
2: $0.25 < P(C_i|\{M\}_t) < 0.75$
3: $P(C_i|\{M\}_t) \geq 0.75$ und
4 die Spur des Fahrzeugs markieren.

Unter der Annahme, daß sich die fehlerfreien Sensoren in ihren Aussagen bestätigen, können fehlerhafte Sensoren anhand mehrfach auftretender Widersprüche bzgl. des Belegungszustandes von Kartenzellen erkannt werden. Kartenzellen mit einer hohen Aussagekraft über den Zustand von Sensoren sind beispielsweise diejenigen, die eine sehr hohe Redundanz R

$$R(C_i) = 1 - \frac{H(C_i)}{H_{max}(C_i)} \tag{2}$$

mit der Entropie H [8]

$$H(C_i) = -\left\{ P(C_i \mid \{M\}_t \cdot \log_2(P(C_i \mid \{M\}_t) + P(\neg C_i \mid \{M\}_t \cdot \log_2(P(\neg C_i \mid \{M\}_t)) \right\} \tag{3}$$

aufweisen.

Für die Bewertung der Sensoren stehen beispielsweise für jede Zelle $C_i$ folgende Informationen zur Verfügung:

- $l_{OCC}$ Liste der Sensoren, die diese Zelle als belegt charakterisiert haben.
- $l_{FREE}$ Liste der Sensoren, die diese Zelle als frei charakterisiert haben.
- $n_{OCC}$ Anzahl der Sensoren, die diese Zelle als belegt charakterisiert haben.
- $n_{FREE}$ Anzahl der Sensoren, die diese Zelle als frei charakterisiert haben.
- $P(C_i \mid \{M\}_t)$ Belegungswahrscheinlichkeit nach Gleichung (1).

Anhand jeder Zelle lassen sich somit Maße für den Zustand der beteiligten Sensoren ableiten. Um die Frage zu beantworten, welche Zellen zu welchen Zeitpunkten ausgewertet werden sollen, können bevorzugt zwei Anwendungsfälle unterschieden werden:

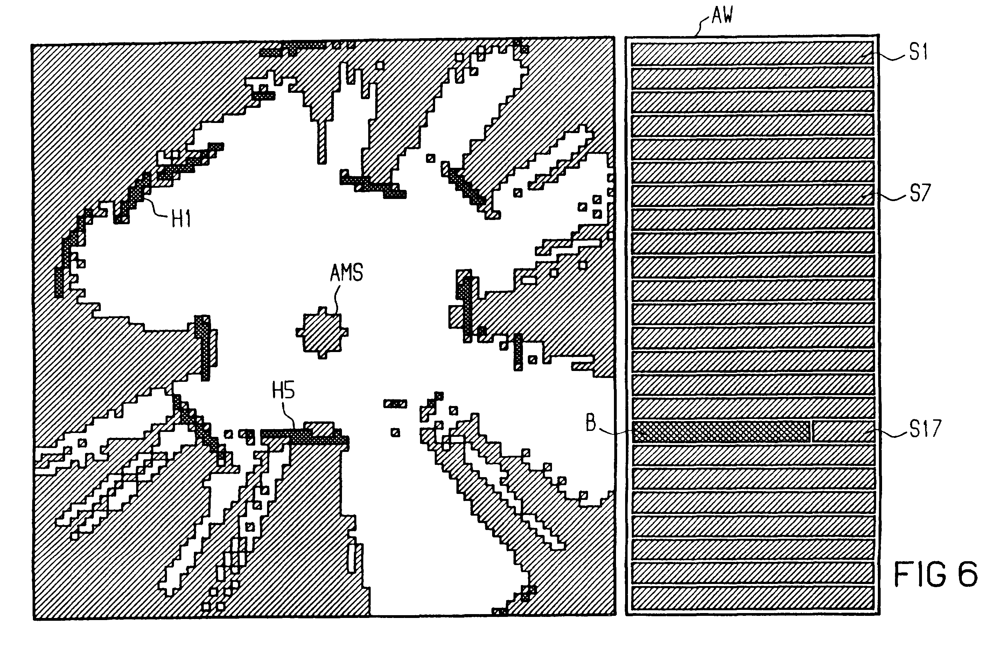

1. Selbsttest:
Für die Durchführung eines Selbsttests, wie er auch in Figur 6 erläutert wird, eignet sich als Fahrmanöver insbesondere das Drehen des AMS auf der Stelle. Dadurch wird eine hohe Überdeckung der Sensorwahrnehmungsbereiche und damit eine hohe Redundanz nach Gleichung (2) erreicht. Nach Abschluß der Drehbewegung sind dann vorzugsweise alle Kartenzellen auszuwerten.

2. On-Line-Überwachung:
Die oft geradlinige Bewegung des Fahrzeugs führt dazu, daß sich die Wahrnehmungsbereiche nicht aller Sensoren überschneiden. Um eine hohe Redundanz zu erreichen, sollten die Kartenzellen bevorzugt erst dann ausgewertet werden, wenn sie sich außerhalb des Wahrnehmungsbereiches aller Sensoren befinden. Andererseits wird beispielsweise aus Speicherplatzgründen die verwendete Karte vom Fahrzeug fortlaufend mitgeführt. Die Bewegung des Fahrzeugs führt nun dazu, daß Zeilen und Spalten am Rand der Karte gelöscht werden. Dies ist notwendig, damit Speicherplatz für den Wahrnehmungsbereich geschaffen wird, in den das AMS vordringt. Genau diese Kartenzellen sind für eine On-Line-Fehlererkennung wichtig, da sie ein Maximum an Redundanz aufweisen.

Zur Beurteilung eines Sensors $S_j$ zum Zeitpunkt t dient dabei die Wahrscheinlichkeit

$$P(Y(S_j) = OK \mid \{K(C)\}_t) = P(\ S_j \mid \{K\}_t)$$
$$P(Y(S_j) = KO \mid \{K(C)\}_t) = P(\neg S_j \mid \{K\}_t) = 1 - P(\ S_j \mid \{K\}_t) \tag{4}$$

der Zufallsvariablen Y mit den Zuständen OK und KO. Diese ist abhängig von der Konsistenz K der bis zum Zeitpunkt t ausgewerteten Kartenzellen $\{C\}$. Die Konsistenz ist ein Maß dafür, inwieweit die Aussage eines Sensors $S_j$ mit den Aussagen anderer Sensoren hinsichtlich der betrachteten Kartenzelle $C_i$ übereinstimmt. Aus der Karte können für jede Zelle für jeden beteiligten Sensor $S_j$, d.h. dieser Sensor ist in mindestens einer der oben genannten Listen eingetragen, diese Konsistenzmaße abgeleitet werden.

$$P(K_i \mid \ S_j) = P(K(C_i) = CON \mid Y(S_j) = OK)$$
$$P(K_i \mid \neg S_j) = P(K(C_i) = CON \mid Y(S_j) = KO) \tag{5}$$

Die bedingte Wahrscheinlichkeit $P(K_i|S_j)$ beschreibt die Konsistenz für den Fall, daß die Aussage des Sensors richtig ist, $P(K_i|\neg S_j)$ unter der hypothetischen Annahme, daß sich der Sensor in seiner Aussage täuscht.
Mit Hilfe der Konsistenzmaße lassen sich unter Verwendung der Bayes'schen Regel die Wahrscheinlichkeiten für den Sensorzustand aus Gleichung (4) dann wie folgt aktualisieren.

$$P(S_j|\{K\}_i) = \frac{P(K_i|S_j) \cdot P(S_j|\{K\}_{i-1})}{P(K_i|S_j) \cdot P(S_j|\{K\}_{i-1}) + P(K_i|\neg S_j) \cdot P(\neg S_j|\{K\}_{i-1})} \tag{6}$$

Die Konsistenz einer Zelle $C_i$ hinsichtlich einer Charakterisierung des Belegungszustandes von einem Sensor $S_j$, wird in Gleichung (5) durch eine Wahrscheinlichkeit beschrieben. Diese wird abhängig davon, ob die Charakterisierung des Sensors Sj für diese Kartenzelle richtig (OK) oder falsch (KO) war, wie folgt bestimmt. Zunächst werden dazu bevorzugt die Belegungswahrscheinlichkeiten der betreffenden Zelle der Umgebungskarte U für zwei Fälle berechnet. $P_{ok}$ entspricht der hypothetischen Belegungswahrscheinlichkeit, falls der Sensor $S_j$ eine wahre Charakterisierung vornimmt, $P_{ko}$ ist die hypothetische Wahrscheinlichkeit, falls der Sensor $S_j$ eine falsche Charakterisierung vornimmt.
Je nachdem, ob der betreffende Sensor die Kartenzelle belegt (OCC) oder frei (FREE) charakterisiert, berechnen sich diese Wahrscheinlichkeiten zu

OCC:

$$P_{ok}(S_j) = P(C_i \mid \{M_{k,k \neq j}\}_t, M_j = OCC) = P(C_i \mid \{M\}_t)$$
$$P_{ko}(S_j) = P(C_i \mid \{M_{k,k \neq j}\}_t, M_j = FREE) \tag{7}$$

FREE:

$$P_{ok}(S_j) = P(C_i \mid \{M_{k,k \neq j}\}_t, M_j = FREE) = P(C_i \mid \{M\}_t)$$
$$P_{ko}(S_j) = P(C_i \mid \{M_{k,k \neq j}\}_t, M_j = OCC) \tag{8}$$

Mit Hilfe von Gleichung (9) werden diese Größen auf die Konsistenzgrößen abgebildet.

$$P(K_i \mid S_j) = \quad \alpha \cdot P_{ok}(S_j) + (1-\alpha) \cdot (1 - P_{ok}(S_j))$$

$$P(K_i \mid \neg S_j) = (1-\alpha) \cdot P_{ko}(S_j) + \quad \alpha \cdot (1 - P_{ko}(S_j)) \tag{9}$$

Mit dem Parameter $\alpha$ kann als Gewichtungsfaktor eingestellt werden, wie stark sich die Auswertung einer Kartenzelle auf die Sensorbewertung auswirken soll. Für $\alpha$ sind vorzugsweise je nach Charakterisierung des Belegungszustandes durch den betrachteten Sensor verschiedene Werte zu wählen:

OCC: $\alpha > 0.5$
FREE: $\alpha < 0.5$

Je weiter $\alpha$ von 0.5 entfernt ist, desto stärker schlägt sich die Auswertung der betrachteten Kartenzelle $C_i$ auf die Bewertung des Sensors $S_j$ nieder.

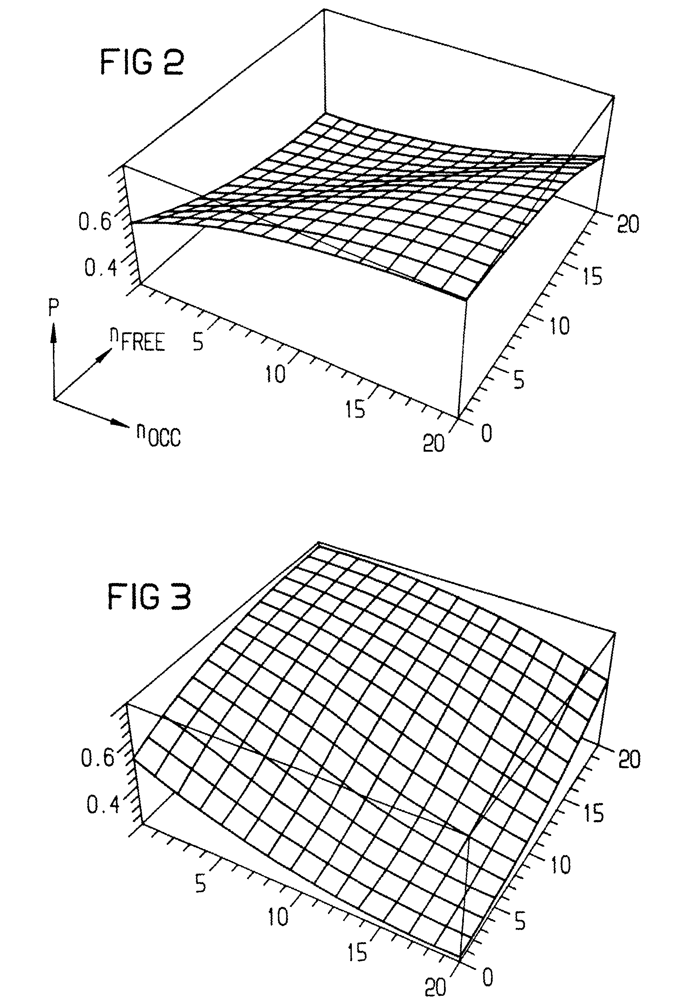

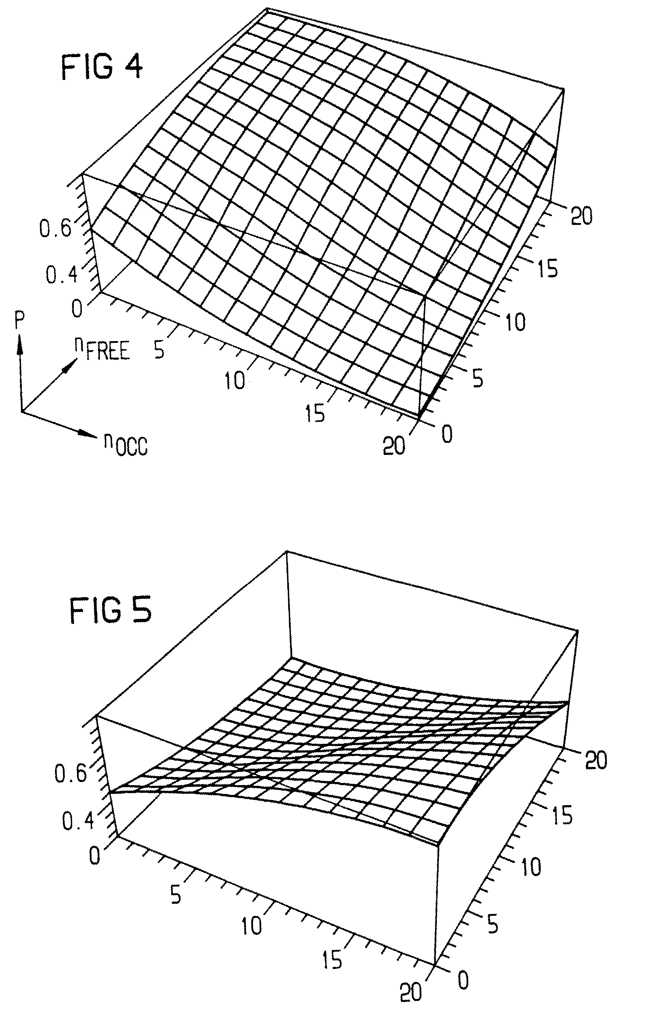

Die Figuren 2 und 3 zeigen die Konsistenzmaße $P(K_i \mid S_j)$ und $P(K_i \mid \neg S_j)$ in Abhängigkeit davon, wieviele Sensoren die betreffende Kartenzelle als belegt bzw. frei klassifiziert haben. Nach oben ist die Wahrscheinlichkeit P aufgetragen nach hinten die Anzahl der freien Zellen $n_{FREE}$ und nach rechts die Anzahl der belegten Zellen $n_{occ}$. Diese Art der Achsenaufteilung gilt auch für die Figuren 4 und 5. In den Figuren 2 und 3 wird davon ausgegangen, daß der betreffende zu bewertende Sensor die jeweiligen Gitterzellen als belegt charakterisiert hat. In den Figuren 4 und 5 wird davon ausgegangen, daß der betreffende Sensor die jeweiligen Zellen als frei charakterisiert hat. In Figur 2 und 3 erfolgt die Darstellung für den Fall, daß eine OCC-Charakterisierung vorgenommen wurde und $\alpha$ 0.75 beträgt. In Figur 4 und 5 erfolgt die Darstellung für den Fall, daß eine FREE-Charakterisierung vorgenommen wurde und $\alpha$ 0.25 beträgt. Anhand der Abbildungen wird folgendes deutlich:

- Für Kartenzellen mit $n_{FREE} = n_{OCC}$ beträgt die Belegungswahrscheinlichkeit 0.5 und in der Information dieser Zelle ist praktisch keine Redundanz vorhanden. Deshalb läßt sich keine gesicherte Aussage über den Zustand der betreffenden Sensoren machen. Die Konsistenzmaße sind demnach nahezu 0.5 und haben damit in Verbindung mit Gleichung (6) kaum Einfluß auf die Sensorbewertung.
- Sehr stark unterschiedliche $n_{FREE}$ und $n_{OCC}$ führen zu von 0.5 verschiedenen Konsistenzmaßen, die in Verbindung mit Gleichung (6) Ausdruck von
Bestätigung $P(K_i \mid S_j) > 0.5$ $P(K_i \mid \neg S_j) < 0.5$ bzw.
Widerspruch $P(K_i \mid S_j) < 0.5$ $P(K_i \mid \neg S_j) > 0.5$
sind.

Die Entscheidung, ob ein bestimmter Sensor als defekt oder funktionsfähig eingestuft wird, kann anhand von Schwellwerten für $P(S_j \mid \{K\}_t)$ durchgeführt werden.

Neben der Erkennung von Sensordefekten in unbekannter Umgebung bietet sich die Möglichkeit einer Sensorkalibrierung. Aufgabe einer Sensorkalibrierung ist es, die Parameter P eines funktionellen Zusammenhangs f

$$A = f(M;P) \tag{10}$$

zwischen Sensormeßwert M und einer weiterverarbeitbaren Aussage A zu bestimmen. Dazu wird bevorzugt zu jeder Messung M die zugehörige Aussage A benötigt. Der Ansatz basiert auf einer Erzeugung der Referenzaussagen durch die Messungen anderer funktionsfähiger und hinreichend gut kalibrierter Sensoren. Die Aussagen der eingehenden Sensormessungen beziehen sich auf den Belegungszustand der zugehörigen Zelle. Die Frage nach der Zelle, die einem Sensormeßwert entspricht, wird durch den Zusammenhang

$$C = f(M;P) \tag{11}$$

beantwortet. Zur Identifikation des Zusammenhangs, d.h. der Bestimmung der relevanten Parameter P muß zu einer Messung M eine gesicherte Belegungshypothese für die zugehörige Zelle C durch Auswertung der in der Karte gespeicherten Information bestimmt werden. Eine konkrete Realisierung für Ultraschall-Entfernungssensoren wird in Figur 6 beschrieben.

Figur 6 zeigt ein Beispiel des erfindungsgemäßen Verfahrens, mit welchem ein Selbsttest zur Kalibrierung von Meßsensoren des autonomen mobilen Systems AMS durchgeführt werden kann. Innerhalb seiner Umgebung befindet sich das AMS zwischen den Hindernissen H1 bis H5 und zugehörige Sensoren sind beispielsweise in einer Auswertetabelle AW mit ihren Bewertungen angegeben. In dieser Auswertetabelle sind lediglich die Sensoren S1, S7 und S17 bezeichnet, der Test kann jedoch ohne Beschränkung der Erfindung für beliebige Sensoren des Systems durchgeführt werden. Nach dem erfindungsgemäßen Verfahren ist der Sensor S17 schadhaft, da seine Meßergebnisse nicht von den restlichen Sensoren des autonomen mobilen Systems MS beim Selbsttest bestätigt werden. Das Konsistenzmaß ist sehr gering, was durch den großen schwarzen Balken B und einem kleinen grauen Balken angedeutet wird. Je nach Art und Anzahl der verwendeten Sensoren können beispielsweise schadhafte Sensoren ausgeschaltet oder angezeigt bzw. kalibriert werden.

Erfindungsgemäß ist die Erkennung all jener Sensorfehler, welche zu Widersprüchen innerhalb der Karte führen, wie beispielsweise

- "schielende" Sensoren → Sensoren mit falsch parametrierter Hauptstrahlachsenrichtung
- "träumende" Sensoren → Sensoren, die nicht vorhandene Objekte sehen
- "blinde" Sensoren → Sensoren, die keine Objekte wahrnehmen

vorgesehen und möglich. Der hellgraue Anteil des jeweils sensorbezogenen Balkens in Figur 6 repräsentiert dabei die Wahrscheinlichkeit $P(S_j|\{K\}_t)$ als Maß für die Fehlerfreiheit eines Sensors.

Der Selbsttest wird beispielsweise in der unpräparierten Einsatzumgebung des AMS durchgeführt. Dieses AMS dreht sich dabei beispielsweise mit einer Winkelgeschwindigkeit von ca. 20 °/s um 360°. Die Messungen werden online in die Karte eingetragen. Nach Beenden der Drehung wird die Karte ausgewertet. Für die Klassifikation der Sensoren hat sich ein Schwellwert von 0.3 bewährt. Durch den Selbsttest konnte dabei ein Defekt des Sensors $S_{17}$ detektiert werden.

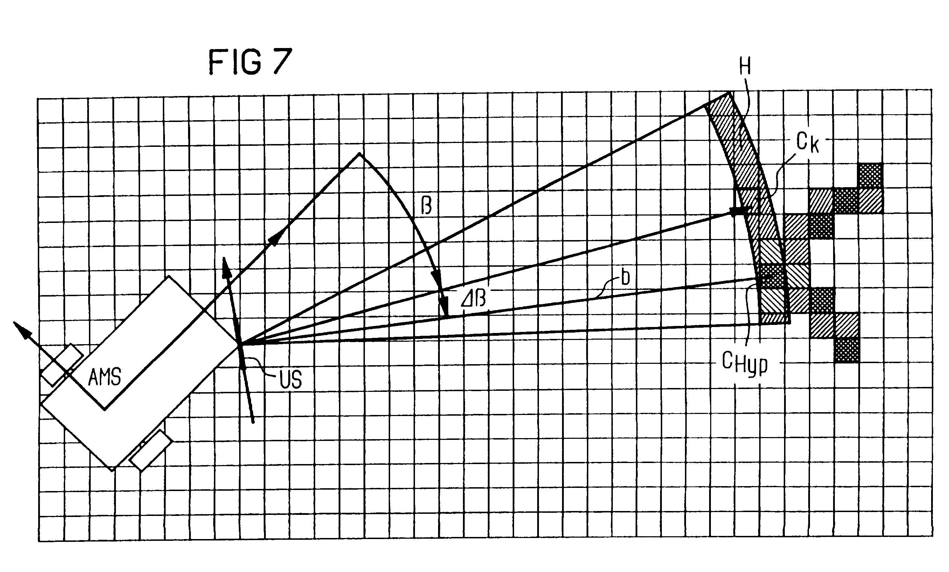

Figur 7 zeigt anhand eines Beispiels die Kalibrierung eines Meßsensors nach dem erfindungsgemäßen Verfahren. Es wird dabei aufgezeigt, in welcher Weise die aufgebaute Umgebungskarte für eine Kalibrierung der beteiligten Sensoren herangezogen werden kann. Hier wird die Bestimmung der tatsächlichen Hauptstrahlachsenrichtung b eines Ultraschallsensors US im Koordinatensystem des AMS durchgeführt

Unter Verwendung von Gleichung (11) wird dazu bevorzugt für jede Messung $M_k$ eines zu kalibrierenden Sensors US mit den aktuellen Sensorparametern Pj die entsprechende Kartenzelle $C_k$ der aus den Messungen der anderen Sensoren aufgebauten Umgebungskarte bestimmt. Für die tatsächliche Position des detektierten Hindernisses ergibt sich wegen der niedrigen Winkelauflösung sowie der möglichen Verstellung des Sensors der in Figur 7 dargestellte Hindernisbereich H.

Innerhalb dieses Hindernisbereiches H kann erfindungsgemäß die wahrscheinlichste Hypothese $C_{Hyp}$ für die zur Messung $M_k$ gehörende Zelle gefunden werden. Der Korrekturwert $\Delta\beta$ der Sensorhauptstrahlrichtung b ergibt sich, wie das in Hilfsfigur 8 näher dargestellt ist, mit 1 als gemessener Entfernung und d als kartesischem Abstand zwischen den Kartenzellen $C_k$ und $C_{Hyp}$ zu

$$\Delta\beta = 2\cdot\arcsin(\frac{d}{2\cdot l}) \tag{12}$$

und wird beispielsweise einem Optimierverfahren zugeführt. Als Algorithmus kann bevorzugt ein Extended-Kalman-Filter implementiert werden. Eine Übertragung des Verfahrens auf einen Anwendungsfall, bei dem neben statischen Parametern auch dynamische Zustandsvariablen , wie z.B. Odometrieparameter geschätzt werden müssen, ist ebenfalls realisierbar. Durch diese Anwendung des erfindungsgemäßen Verfahrens konnte die Hauptstrahlachsenrichtung bis auf $\pm 3°$ genau korrigiert werden.

Literatur

[1] Rencken W.D, Leuthäusser I., Bauer R., Feiten W., Lawitzky G., Möller M., Low-Cost Mobile Robots for Complex Non-Production Environments, Proc. 1st IFAC Int. Workshop on Intelligent Autonomous Vehicles, April 1993.

[2] Beckerman M., Oblow E. M.: Treatment of Systematic Errors in the Processing of Wide-Angle Sonar Sensor Data for Robotic Navigation, IEEE Transactions on Robotics and Automation, vol. 6, No. 2, April 1990.

[3] Borenstein J., Koren Y.: The Vector Field Histogramm - Fast Obstacle Avoidance for Mobile Robots, IEEE Transactions on Robotics and Automation, Vol. 7, No. 3, 1991.

[4] Borenstein J., Koren Y.: Real-Time Obstacle Avoidance for Fast Mobile Robots, IEEE Transactions on Systems, Man, and Cybernetics, 19(5),1989, 1179-1187.

[5] Matthies L., Elfes A.: Probablistic Estimation Mechanisms and Testrelated Representations for Sensor Fusion, Proc. of the SPIE - The International Society for Optical Engeneering, 1003, 1988,2-11.

[6] Elfes A.: Dynamic Control of Robot Perception Using Stochastic Spatial Models, Information Processing in Autonomous Mobile Robots, Proceedings of the International Workshop in Munich, Germany 6-8 March 1991, Springer-Verlag, Berlin, Germany, 1991.

[7] Elfes A.: Dynamic Control of Robot Perception Using Multi-Property Inference Grids, Proceedings of the 1992 IEEE International Conference on Robotics and Automation, Nice France, May 1992.

[8] Shannon C.E., Weaver W.: The Mathematical Theory of Communication, University of Illinois Press, 1949.

[9] Elfes A.: Sonar-based real-world mapping and navigation, IEEE Journal of robotics and automation, Juni 1987, USA, Bd. RA-3, Nr.3, ISSN 0882-4967, S. 249-265, XP002051542.

**Patentansprüche**

1. Verfahren zur Bewertung der Meßqualität eines Entfernungsmeßsensors an einem autonomen mobilen System mit folgenden Merkmalen:

   a) von einer Mehrzahl sich an dem autonomen mobilen System befindenden Entfernungsmeßsensoren werden Hindernisse in der Umgebung des Systems vermessen und anhand der Meßergebnisse werden in ihrer Lage mit der Umgebung korrespondierende Zellen einer zellular strukturierten Umgebungskarte bezüglich ihres Belegungszustandes mit Hindernissen charakterisiert, dadurch gekennzeichnet, dass
   b) für eine jeweilige Zelle wird je Meßsensor identifizierbar vermerkt, welche Sensoren diese Zelle vermessen haben,
   c) die Meßqualität eines ersten Meßsensors wird mindestens bezüglich einer ersten Zelle danach bewertet, wieviele andere Meßsensoren bezüglich des Belegungszustandes der ersten Zelle zur gleichen Charakterisierung des Belegungszustandes gelangen wie der erste Meßsensor, wobei die Meßqualität des ersten Sensors um so größer bewertet wird, je mehr von den anderen Sensoren seine Charakterisierung bestätigen.

2. Verfahren nach Anspruch 1, bei dem der Belegungszustand einer jeweiligen Zelle nach Belegungs- und Frei-Wahrscheinlichkeit charakterisiert wird, wobei sich die Vergabe der jeweiligen Wahrscheinlichkeiten danach richtet wieviele Meßsensoren dort ein Hindernis bzw. kein Hindernis gemessen haben.

3. Verfahren nach einem der vorangehenden Ansprüche, bei dem die Meßqualität eines Meßsensors $S_j$ als Wahrscheinlichkeit P für den Sensorzustand wie folgt bewertet wird:

$$P(Y(S_j) = OK \mid \{K(C)\}_t) = P(\ S_j \mid \{K\}_t)$$
$$P(Y(S_j) = KO \mid \{K(C)\}_t) = P(\neg S_j \mid \{K\}_t) = 1 - P(\ S_j \mid \{K\}_t) \tag{13}$$

mit der Zufallsvariablen Y und den Zuständen OK und KO für funktionstüchtig und defekt, wobei diese abhängt von der Konsistenz K der bis zum Zeitpunkt t ausgewerteten Zellen {C} und die Konsistenz ein Maß dafür darstellt, inwieweit die Charakterisierung eines Meßsensors $S_j$ mit den Charakterisierungen anderer Meßsensoren hinsichtlich der betrachteten Kartenzelle $C_i$ übereinstimmt.

4. Verfahren nach Anspruch 3, bei dem für einen Meßsensor ein Konsistenzmaß gemäß:

$$P(K_i \mid \ S_j) = P(K(C_i) = CON \mid Y(S_j) = OK)$$
$$P(K_i \mid \neg S_j) = P(K(C_i) = CON \mid Y(S_j) = KO) \tag{14}$$

vergeben wird und die Wahrscheinlichkeit für den Sensorzustand gemäß:

$$P(S_j|\{K\}_i) = \frac{P(K_i|S_j) \cdot P(S_j|\{K\}_{i-1})}{P(K_i|S_j) \cdot P(S_j|\{K\}_{i-1}) + P(K_i|\neg S_j) \cdot P(\neg S_j|\{K\}_{i-1})} \tag{15}$$

aktualisiert wird.

5. Verfahren nach Anspruch 4, bei dem die Wahrscheinlichkeit $P(S_j|\{K\}_i)$ in Abhängigkeit des vom Meßsensor als richtig $P_{ok}$ oder falsch $P_{ko}$ charakterisierten Belegungszustandes für eine als belegt OCC charakterisierte Zelle mindestens zu:

$$P_{ok}(S_j) = P(C_i \mid \{M_{k,k\neq j}\}_i, M_j = OCC) = P(C_i \mid \{M\}_i)$$
$$P_{ko}(S_j) = P(C_i \mid \{M_{k,k\neq j}\}_i, M_j = FREE) \tag{16}$$

und für eine als frei FREE charakterisierte Zelle mindestens zu:

$$P_{ok}(S_j) = P(C_i \mid \{M_{k,k\neq j}\}_i, M_j = FREE) = P(C_i \mid \{M\}_i)$$
$$P_{ko}(S_j) = P(C_i \mid \{M_{k,k\neq j}\}_i, M_j = OCC) \tag{17}$$

mit M als Anzahl der durchgeführten Messungen berechnet wird.

6. Verfahren nach Anspruch 5, bei dem das Konsistenzmaß mindestens zu:

$$P(K_i \mid S_j) = \alpha \cdot P_{ok}(S_j) + (1-\alpha) \cdot (1 - P_{ok}(S_j))$$
$$P(K_i \mid \neg S_j) = (1-\alpha) \cdot P_{ko}(S_j) + \alpha \cdot (1 - P_{ko}(S_j)) \tag{18}$$

bestimmt wird, wobei mit dem Maßstabsfaktor $\alpha$ eingestellt wird, wie stark sich die Auswertung einer Kartenzelle auf die Sensorbewertung auswirkt.

7. Verfahren nach Anspruch 6, bei dem je nach Charakterisierung der betrachteten Zelle durch den zu bewertenden Meßsensor verschiedene Werte für $\alpha$ gewählt werden und für Charakterisierung als

Belegt : $\alpha$ > 0.5 und als
Frei: $\alpha$ < 0.5 gilt.

8. Verfahren nach einem der vorangehenden Ansprüche, bei dem lediglich eine bestimmte Anzahl von Zellen, die Bewertungszellen ausgewertet werden, welche von dem autonomen mobilen System bei einer Bewegung in Form eines Auswertefensters der Umgebung mitgeführt werden und bei dem solche Bewertungszellen ausgewertet werden, welche sich unmittelbar am Rand des Bewertungsfensters befinden.

9. Verfahren nach einem der vorangehenden Ansprüche, bei dem ein Selbsttest durchgeführt wird, indem das autonome mobile System sich solange dreht, bis alle Meßsensoren wenigstens ein Hindernis vermessen haben und anhand der Bewertung einer Mehrzahl von Bewertungszellen die Meßqualität der einzelnen Meßsensoren bestimmt wird.

10. Verfahren nach einem der vorangehenden Ansprüche, bei dem Ultraschall- oder optische Meßsensoren verwendet werden.

**Claims**

1. Method for evaluating the measurement quality of a distance measuring sensor on an autonomous mobile system, having the following features:

   a) obstacles in the environment of the system are measured by a plurality of distance measuring sensors located on the autonomous mobile system, and the measurement results are used to characterize, with reference to their state of occupancy by obstacles, cells of a cellularly structured environment card which correspond in their position with the environment, characterized in that
   b) for a respective cell it is noted identifiably per measuring sensor which sensors have measured this cell, and
   c) the measurement quality of a first measuring sensor is evaluated at least with reference to a first cell in accordance with how many other measuring sensors, with reference to state of occupancy, reach the same characterization of the state of occupancy of the first cell as does the first measuring sensor, the measurement quality of the first sensor being evaluated more highly the more the other sensors confirm its characterization.

2. Method according to Claim 1, in which the state of occupancy of a respective cell is characterized in accordance with the probability of occupancy and of being free, the allocation of the respective probabilities being determined by how many measuring sensors have measured an obstacle or no obstacle there.

3. Method according to one of the preceding claims, in which the measurement quality of a measuring sensor $S_j$ is evaluated as follows as a probability P for the sensor state:

$$P(Y(S_j)=OK|\{K(C)\}_t)=P(S_j|\{K\}_t)$$

$$P(Y(S_j)=KO|\{K(C)\}_t)=P(-S_j|\{K\}_t)=1-P(S_j|\{K\}_t) \tag{13}$$

   with the random variables Y and the states OK and KO for reliable and defective, said probability depending on the consistency K of the cells {C} evaluated up to the instant t, and the consistency constituting a measure of the extent to which the characterization of a measuring sensor $S_j$ corresponds to the characterizations of other measuring sensors with regard to the card cell $C_i$ under consideration.

4. Method according to Claim 3, in which a measure on consistency is allocated to a measuring sensor in accordance with:

$$P (K_i|S_j)=P(K(C_i)=CON|Y(S_j)=OK)$$

$$P(K_i|-S_j)=P(K(C_i)=CON|Y(S_j)=KO) \tag{14}$$

   and the probability for the sensor state is updated in accordance with

$$P(S_j|\{K\}_i) = \frac{P(K_i|S_j)\cdot P(S_j|\{K\}_{t-1})}{P(K_i|S_j)\cdot P(S_j|\{K\}_{i-1})+P(K_i|-S_j)\cdot P(-S_j|\{K\}_{i-1})} \tag{15}$$

5. Method according to Claim 4, in which the probability $P(S_j|\{K\}_i)$ is calculated as a function of the state of occupancy characterized by the measuring sensor as correct $P_{ok}$ or false $P_{ko}$ to be at least:

$$P_{ok}(S_j)=P(C_i|\{M_{k,k\neq j}\}_t, M_j=OCC)=P(C_i|\{M\}_t)$$

$$P_{ko}(S_j)=P(C_i)|\{M_{k,k\neq j}\}_t,M_j=FREE \tag{16}$$

   for a cell characterized as occupied OCC, and to be at least:

$$P_{ok}(S_j)=P(C_i|\{M_{k,k\neq j}\}_t, M_j=FREE)=P(C_i|\{M\}_t)$$

$$P_{ko}(S_j)=P(C_i|\{M_{k,k\neq j}\}_t, M_j=OCC) \tag{17}$$

where M is the number of measurements carried out, for a cell characterized as FREE.

6. Method according to Claim 5, in which the measure of consistency is determined to be at least:

$$P(K_i|S_j)= \alpha \cdot P_{ok}(S_j)+(1-\alpha)\cdot(1-P_{ok}(S_j))$$

$$P(K_i|\text{-}S_j)=(1-\alpha)\cdot P_{ko}(S_j)+ \alpha \cdot(1-P_{ko}(S_j)) \tag{18}$$

the scale factor a being used to set how strongly the evaluation of a card cell affects the sensor evaluation.

7. Method according to Claim 6, in which different values for $\alpha$ are selected by the measuring sensor to be evaluated depending on the characterization of the cell under consideration, and for the characterization $\alpha > 0.5$ holds as occupied and $\alpha < 0.5$ holds as free.

8. Method according to one of the preceding claims, in which only a specific number of cells, the evaluation cells, are evaluated, said cells being carried along by the autonomous mobile system during movement in the form of an evaluation window of the environment, and in which those evaluation cells are evaluated which are located directly at the edge of the evaluation window.

9. Method according to one of the preceding claims, in which a self-test is carried out by having the autonomous mobile system rotate until all the measuring sensors have measured at least one obstacle and the measurement quality of the individual measuring sensors is determined with the aid of the evaluation of a plurality of evaluation cells.

10. Method according to one of the preceding claims, in which use is made of ultrasonic or optical measuring sensors.

**Revendications**

1. Procédé d'évaluation de la qualité de mesure d'un capteur de mesure de distance sur un système mobile autonome, ayant les caractéristiques suivantes:

   a) une pluralité de capteurs de mesure de distance placés sur le système mobile autonome mesurent des obstacles dans l'environnement du système, et au moyen des résultats de mesure, des cellules d'une carte d'environnement de structure cellulaire, qui correspondent dans leur position avec ledit environnement, sont caractérisées par rapport à leur état d'occupation par des obstacles, caractérisé en ce que
   b) pour une cellule respective, on note de manière identifiable par capteur de mesure lesquels des capteurs ont mesuré cette cellule,
   c) on évalue la qualité de mesure d'un premier capteur de mesure par rapport à au moins une première cellule en fonction du nombre d'autres capteurs de mesure qui, par rapport à l'état d'occupation de la première cellule, parviennent à la même caractérisation de l'état d'occupation que le premier capteur de mesure, la qualité de mesure du premier capteur étant évaluée d'autant plus grande que le nombre d'autres capteurs confirmant sa caractérisation est élevé.

2. Procédé selon la revendication 1, dans lequel on caractérise l'état d'occupation d'une cellule respective selon la probabilité d'occupation et d'inoccupation, l'attribution des probabilités respectives se faisant en fonction du nombre de capteurs de mesure y ayant mesuré un obstacle resp. pas d'obstacle.

3. Procédé selon l'une des revendications précédentes, dans lequel on évalue la qualité de mesure d'un capteur de mesure $S_i$ comme probabilité P de l'état du capteur de la manière suivante :

$$P(Y(S_j) = OK \mid \{K(C)\}_1) = P(\ S_j \mid \{K\}_1)$$

$$P(Y(S_j) = KO \mid \{K(C)\}_1) = P(\neg S_j \mid \{K\}_1) = 1 - P(\ S_j \mid \{K\}_1) \tag{13}$$

avec la variable aléatoire Y et les états OK et KO pour "capable de fonctionner" et "défectueux", celle-ci étant dépendante de la consistance K des cellules {C} évaluées jusqu'à l'instant t et la consistance représentant un critère permettant de déterminer dans quelle mesure la caractérisation d'un capteur de mesure $S_j$ concorde avec les caractérisations d'autres capteurs de mesure en ce qui concerne la cellule de carte $C_1$ considérée.

**4.** Procédé selon la revendication 3, dans lequel on attribue, pour un capteur de mesure, un critère de consistance selon :

$$P(K_i \mid \ S_j) = P(K(C_i) = CON \mid Y(S_j) = OK)$$

$$P(K_i \mid \neg S_j) = P(K(C_i) = CON \mid Y(S_j) = KO) \tag{14}$$

et on actualise la probabilité de l'état du capteur selon :

$$P(S_j \mid \{K\}_i) = \frac{P(K_i \mid S_j) \cdot P(S_j \mid \{K\}_{i-1})}{P(K_i \mid S_j) \cdot P(S_j \mid \{K\}_{i-1}) + P(K_i \mid \neg S_j) \cdot P(\neg S_j \mid \{K\}_{i-1})} \tag{15}$$

**5.** Procédé selon la revendication 4, dans lequel on calcule la probabilité **$P(S_j \mid \{K\}_i)$** en fonction de l'état d'occupation caractérisé de vrai $P_{ok}$ ou de faux Pko par le capteur de mesure pour une cellule caractérisée d'occupée OCC au moins à :
6.

$$P_{ok}(S_j) = P(C_i \mid \{M_{k,k \neq j}\}_1, M_J = OCC) = P(C_i \mid \{M\}_1)$$

$$P_{ko}(S_j) = P(C_i \mid \{M_{k,k \neq j}\}_1, M_J = FREE) \tag{16}$$

et pour une cellule caractérisée de libre FREE au moins à :

$$P_{ok}(S_j) = P(C_i \mid \{M_{k,k \neq j}\}_1, M_J = FREE) = P(C_i \mid \{M\}_1)$$

$$P_{ko}(S_j) = P(C_i \mid \{M_{k,k \neq j}\}_1, M_J = OCC) \tag{17}$$

avec M le nombre de mesures effectuées.

**6.** Procédé selon la revendication 5, dans lequel on détermine le critère de consistance au moins à :

$$P(K_i \mid S_j) = \quad \alpha \cdot P_{ok}(S_j) + (1 - \alpha) \cdot (1 - P_{ok}(S_j))$$

$$P(K_i \mid \neg S_j) = (1-\alpha) \cdot P_{ko}(S_j) + \quad \alpha \cdot (1 - P_{ko}(S_j))$$

$$(18)$$

le facteur de critère $\alpha$ servant à déterminer l'intensité de l'effet de l'évaluation d'une cellule de carte sur l'évaluation du capteur.

7. Procédé selon la revendication 6, dans lequel on choisit en fonction de la caractérisation de la cellule considérée par le capteur de mesure à évaluer, différentes valeurs pour a et on applique pour une caractérisation de

   occupé : $\alpha > 0.5$ et de
   libre : $\alpha < 0.5$.

8. Procédé selon l'une des revendications précédentes, dans lequel on évalue uniquement un certain nombre de cellules, les cellules d'évaluation, lesquelles sont emportées par le système mobile autonome lors d'un mouvement sous forme d'une fenêtre d'évaluation de l'environnement, et dans lequel on évalue celles parmi les cellules d'évaluation, qui se trouvent directement au bord de la fenêtre d'évaluation.

9. Procédé selon l'une des revendications précédentes, dans lequel on effectue un test automatique consistant à faire tourner le système mobile autonome jusqu'à ce que tous les capteurs de mesure aient mesuré au moins un obstacle et que la qualité de mesure des différents capteurs de mesure ait été déterminée au moyen de l'évaluation d'une pluralité de cellules d'évaluation.

10. Procédé selon l'une des revendications précédentes, dans lequel on utilise des capteurs de mesure à ultrasons ou optiques.

FIG 1

U

FIG 2

FIG 3

FIG 4

P

$n_{FREE}$

$n_{OCC}$

FIG 5

FIG 6

EP 0 928 428 B1

FIG 7

EP 0 928 428 B1

FIG 8